# EUROPEAN PATENT APPLICATION

(11) **EP 4 080 382 A2**
(43) Date of publication of application: **26.10.2022**
(21) Application number: 22177994.5
(22) Date of filing: 09.06.2022
(51) Int. Cl.: G06F 16/63, H04W 4/12

(54) **METHOD AND APPARATUS FOR GENERATING REMINDER AUDIO, ELECTRONIC DEVICE AND STORAGE MEDIUM**

(30) Priority: 11.06.2021 CN 202110653252
(71) Applicant: Apollo Intelligent Connectivity (Beijing) Technology Co., Ltd., Beijing 100176 (CN)
(72) Inventor: LIU, Jing, Beijing, 100176 (CN); LIU, Jianli, Beijing, 100176 (CN)
(74) Representative: Maiwald Patent- und Rechtsanwaltsgesellschaft mbH

(57) **Abstract**

Disclosed are a method and an apparatus for generating a reminder audio, an electronic device and a storage medium, which relate to a field of artificial intelligence (AI) technologies, and specifically to a field of deep learning (DL) and cloud platform technologies. The method includes: acquiring audio data (S101); caching the audio data in response to detecting that the audio data is voice data (S 102); and stopping caching the audio data in response to detecting that the audio data is non-voice data, determining the cached audio data as a reminder audio in response to a content of the cached audio data being a reminder content, and storing the reminder audio in a disk (S103).

## Description

### TECHNICAL FIELD

The disclosure relates to a field of artificial intelligence (AI) technologies, specifically to a field of deep learning (DL) and cloud platform technologies, and particularly to a method and an apparatus for generating a reminder audio, an electronic device and a storage medium.

### BACKGROUND

At present, in order to enhance the user experience of a vehicle terminal, there are more and more researches on intelligent vehicles, and a voice creation reminding function has become one of the most widely used technologies for a vehicle terminal.

However, it becomes an urgent problem to be solved in the industry how to accurately record a reminder audio.

### SUMMARY

A method and an apparatus for generating a reminder audio, an electronic device and a storage medium are provided.

According to a first aspect, a method for generating a reminder audio is provided, and includes: acquiring audio data; caching the audio data in response to detecting that the audio data is voice data; and stopping caching the audio data in response to detecting that the audio data is non-voice data, determining the cached audio data as a reminder audio in response to a content of the cached audio data being a reminder content, and storing the reminder audio in a disk.

Optionally, the method further includes: detecting by a voice activity detection algorithm whether the audio data is the voice data.

Optionally, the voice activity detection algorithm is a web real-time communication voice activity detection (Web RTC VAD) algorithm.

Optionally, caching the audio data includes:
writing the audio data into a public data queue;
reading the audio data from the public data queue; and
caching the read audio data.

Optionally, the method further includes:
sending the cached audio data to a cloud;
receiving an audio saving instruction sent by the cloud, the audio saving instruction being generated by the cloud in response to the cloud detecting that a content of the audio data is a reminder content through semantic parsing; and
determining the cached audio data as the reminder audio based on the audio saving instruction.

According to a second aspect, an apparatus for generating a reminder audio is provided, and includes: an acquiring module, configured to acquire audio data; a first detection module, configured to cache the audio data in response to detecting that the audio data is voice data; and a second detection module, configured to stop caching the audio data in response to detecting that the audio data is non-voice data, determine the cached audio data as a reminder audio in response to a content of the cached audio data being a reminder content, and store the reminder audio in a disk.

Optionally, the apparatus further includes:
a detection module, configured to detect by a voice activity detection algorithm whether the audio data is the voice data.

Optionally, the voice activity detection algorithm is a Web Real-Time Communication Voice Activity Detection (Web RTC VAD) algorithm.

Optionally, the cache module includes:
a write unit, configured to write the audio data into a public data queue;
a read unit, configured to read the audio data from the public data queue; and
a cache unit, configured to cache the read audio data.

Optionally, the apparatus further includes:
a sending module, configured to send the cached audio data to a cloud;
a receiving module, configured to receive an audio saving instruction sent by the cloud, the audio saving instruction being generated by the cloud in response to the cloud detecting that a content of the audio data is a reminder content through semantic parsing; and
a determining module, configured to determine the cached audio data as the reminder audio based on the audio saving instruction.

According to a third aspect, an electronic device is provided, the electronic device includes: at least one processor; and a memory communicatively connected to the at least one processor; the memory is stored with instructions executable by the at least one processor, the instructions are performed by the at least one processor, to cause the at least one processor to perform the method for generating a reminder audio as described in a first aspect of the disclosure.

According to a fourth aspect, a non-transitory computer-readable storage medium stored with computer instructions is provided, the computer instructions are configured to cause the computer to perform the method for generating a reminder audio as described in a first aspect of the disclosure.

According to a fifth aspect, a computer program product is provided, and the computer program product includes a computer program, the computer program is configured to perform the method for generating a reminder audio as described in a first aspect of the disclosure when performed by a processor.

It should be understood that, the content described in the part is not intended to identify key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a method for generating a reminder audio according to an embodiment of the disclosure;
FIG. 2 is a flowchart illustrating a method for generating a reminder audio according to an embodiment of the disclosure;
FIG. 3 is a flowchart illustrating a method for generating a reminder audio according to a third embodiment of the disclosure;
FIG. 4 is a flowchart illustrating a method for generating a reminder audio according to an embodiment of the disclosure;
FIG. 5 is a diagram illustrating a scene of a method for generating a reminder audio according to an embodiment of the disclosure;
FIG. 6 is a diagram illustrating an implementation of a method for generating a reminder audio according to an embodiment of the disclosure;
FIG. 7 is a block diagram illustrating an apparatus for generating a reminder audio according to an embodiment of the disclosure;
FIG. 8 is a block diagram illustrating an apparatus for generating a reminder audio according to an embodiment of the disclosure;
FIG. 9 is a block diagram illustrating an electronic device in a method for generating a reminder audio in the embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein. Similarly, for clarity and conciseness, descriptions of well-known functions and structures are omitted in the following descriptions.

Artificial intelligence (AI), is a science of technology that studies and develops theories, methods, technologies and application systems configured to simulate, extend and expand human intelligence. At present, AI technology is widely applied due to high automation, high accuracy and low cost.

Deep Learning (DL) is a new research direction in the field of Machine Learning (ML) that learns inherent law and representation hierarchy of sample data, and information obtained in the learning process is of great help in interpretation of data such as words, images and sound. Its final goal is that the machine may have analytic learning ability like humans, which may recognize data such as words, images, sound, etc. In terms of specific research content, it mainly includes a neural network system based on a convolution operation, that is, a convolutional neural network; a self-encoded neural network based on a multi-layer neuron; and a deep belief network pretrained in a manner of a multi-layer self-encoded neural network thereby further optimizing a neural network weight in combination with authentication information. DL makes many achievements in search technology, data mining, machine learning, machine translation, natural language processing (NLP), multimedia learning, voice, recommendation, and personalization technology and other related arts. DL enables a machine to imitate human activities such as audition and thinking, which solves many complex pattern recognition problems, and makes great progress in AI related technologies.

A cloud platform refers to a service based on hardware resources and software resources that provides computing, network and storage capabilities. The cloud platform may be divided into three categories: a storage type cloud platform mainly based on data storage, a computing type cloud platform mainly based on data processing, and a comprehensive cloud computing platform in consideration of both computation and data storage processing.

A method and an apparatus for generating a reminder audio, an electronic device and a storage medium are described in embodiments of the disclosure in combination with attached drawings.

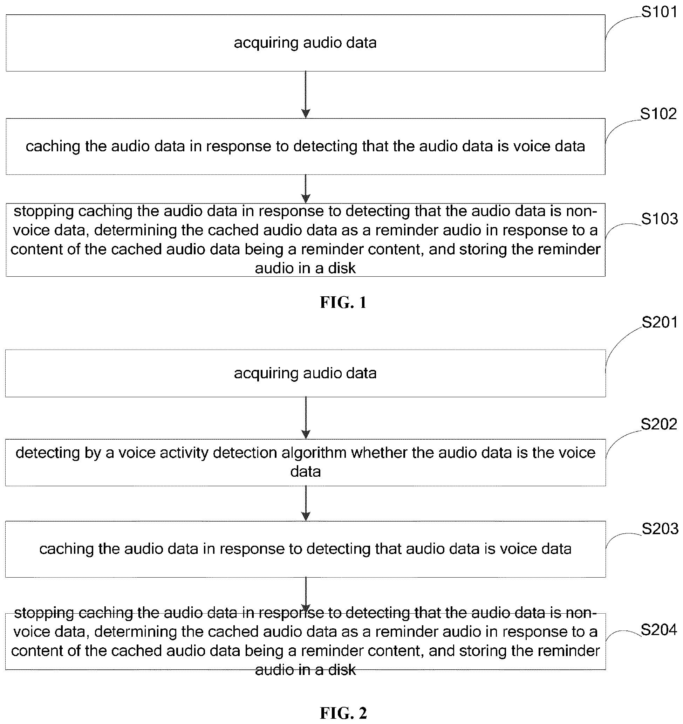

FIG. 1 is a flowchart illustrating a method for generating a reminder audio according to an embodiment of the disclosure.

As illustrated in FIG. 1, the method for generating a reminder audio in embodiments of the disclosure may include the following blocks:
At S101, audio data is acquired.

In some embodiments, an execution subject of the method for generating a reminder audio in the embodiment of the disclosure may be an apparatus for generating a reminder audio in the embodiment of the disclosure, and the apparatus for generating a reminder audio may be a hardware device with data information processing ability and/or a software necessary to drive the work of the hardware device. Optionally, the execution subject may include a workstation, a server, a computer, a user terminal and other devices. The user terminal includes but not limited to a mobile phone, a computer, a smart voice interaction device, a smart appliance, a vehicle terminal, etc.

In the embodiment of the disclosure, the audio data may be audio data collected in real time by a microphone or other recording device. For example, when a user sets a daily reminder by a voice instruction on a vehicle terminal, audio data containing reminder content of the voice instruction is recorded by a microphone. It is understandable that the above audio data may include effective human voice and noise, in which the effective human voice is voice data of a user, and the noise is non-voice data.

At S102, the audio data is cached in response to detecting that the audio data is voice data.

In some embodiments, detection is performed on the audio data acquired at block S101. The audio data is cached in response to the audio data being voice data. It needs to be noted that, detection and cache of the audio data in the embodiment of the disclosure may be performed asynchronously, and when the microphone records voice data of the user, detection and cache may be implemented at the same time.

At S103, caching the audio data is stopped in response to detecting that the audio data is non-voice data, the cached audio data is determined as a reminder audio in response to a content of the cached audio data being a reminder content, and the reminder audio is stored in a disk.

In some embodiments, detection is performed on the audio data acquired at block S101, and caching the audio data is stopped in response to detecting that the audio data is non-voice data, thereby achieving extraction of the voice data from the audio data. The content of the cached audio data is detected by semantic parsing, and the cached audio data is determined as the reminder audio and the reminder audio is stored in a disk in response to the content of the cached audio data being the reminder content, thereby achieving exact recording of the reminder audio, so that a terminal may play a complete and accurate reminder audio at a time point set by a user, to achieve voice reminding service. The disk may be a storage apparatus in a vehicle terminal or other clients, which is not limited in the disclosure. The cached audio data is discarded in response to the content of the cached audio data being not a reminder content.

In summary, in the method for generating a reminder audio in the embodiment of the disclosure, the audio data is acquired, and the audio data is cached in response to detecting that the audio data is the voice data; and caching of the audio data is stopped in response to detecting that the audio data is non-voice data, and the cached audio data is determined as a reminder audio in response to a content of the cached audio data being a reminder content, and the reminder audio is stored in a disk. By detecting the audio data, the voice data in the audio data is acquired and cached, and when the cached audio data is audio data including the reminder content, the cached audio data is determined as the reminder audio, and stored in the disk, thereby removing non-voice data in the audio data acquired and a non-reminder audio in the voice data, and achieving accurate recording of a reminder audio.

FIG. 2 is a flowchart illustrating a method for generating a reminder audio according to an embodiment of the disclosure.

As illustrated in FIG. 2, on the basis of the embodiment as illustrated in FIG. 1, the method for generating a reminder audio in the embodiment of the disclosure may specifically include the following blocks:
At S201, audio data is acquired.

In some embodiments, block S201 in the embodiment is the same as block S101 in the above embodiment, which will not be repeated here.

At S202, a voice activity detection algorithm is adopted to detect whether audio data is the voice data.

In some embodiments, the voice activity detection (VAD) is generally configured to identify speech presence and speech absence in an audio signal, that is, to identify a start point and an end point of a speech or a voice from a given audio signal. In a speech recognition system, correct and effective activity detection not only may reduce calculation amount and shorten processing time, but also may eliminate noise interference of a silence segment and enhance accuracy of speech recognition.

A VAD algorithm is adopted to detect whether the audio data acquired at block S201 is voice data. In the embodiment of the disclosure, a web real-time communication voice activity detection (Web RTC VAD) algorithm is adopted as the VAD algorithm for detecting the audio data. The algorithm effectively distinguishes human voice and noise through probability calculation based on a Gaussian model and a fixed frequency-band feature of the human voice, that is, effectively distinguishing voice data and non-voice data in the audio data.

At S203, the audio data is cached in response to detecting that audio data is voice data.

At S204, caching the audio data is stopped in response to detecting that the audio data is non-voice data, and the cached audio data is determined as a reminder audio in response to a content of the cached audio data being a reminder content, and the reminder audio is stored in a disk.

In some embodiments, blocks S203-S304 in the embodiment are the same as blocks S101-S 103 in the above embodiment, which will not be repeated here.

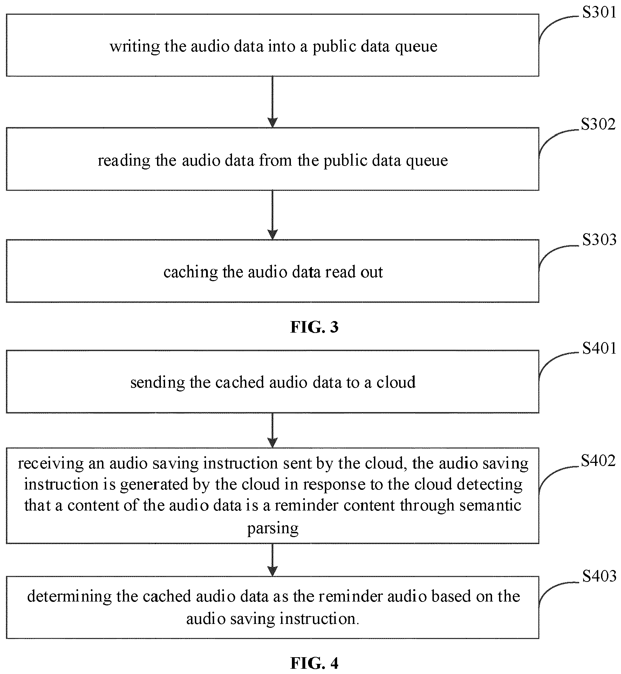

Further, as illustrated in FIG. 3, on the basis of the embodiment as illustrated in FIG. 2, "the audio data is cached" at block S203 may include the following blocks:
At S301, the audio data is written into a public data queue.

In some embodiments, the audio data detected as the voice data at block S203 is written into a public data queue.

At S302, the audio data is read from the public data queue.

In some embodiments, the audio data written into a public data queue at block S301 is read.

At S303, the read audio data is cached.

In some embodiments, the audio data read at block S302 is cached.

Further, as illustrated in FIG. 4, on the basis of the embodiment of FIG. 2, the method for generating a reminder audio in the embodiment may further include the following blocks:
At S401, the cached audio data is sent to a cloud.

Specifically, the cached audio data is sent to a cloud when audio data stops being cached.

At S402, an audio saving instruction sent by the cloud is received, the audio saving instruction is generated by the cloud in response to the cloud detecting that a content of the audio data is a reminder content through semantic parsing.

In some embodiments, the cloud receives the audio data, and performs semantic parsing on the received audio data, and the audio saving instruction is generated and sent to an apparatus for generating a reminder audio in response to detecting that the content of the audio data is a reminder content. The apparatus for generating a reminder audio receives the audio saving instruction sent by the cloud. The semantic parsing may be implemented by an automated speech recognition (ASR) technology and a natural language understanding (NLU) technology.

At S403, the cached audio data is determined as the reminder audio based on the audio saving instruction.

In some embodiments, the apparatus for generating a reminder audio determines the cached audio data as the reminder audio based on the received audio saving instruction, and stores it in a disk. Therefore, an accurate reminder audio containing a reminding content is generated, so that the reminder audio is played to a user at the reminding time point, to achieve voice reminding service.

In summary, in the method for generating a reminder audio in the embodiment of the disclosure, the audio data is acquired, and the audio data is cached in response to detecting that the audio data is the voice data; and caching of the audio data is stopped in response to detecting that the audio data is non-voice data, and the cached audio data is determined as a reminder audio in response to a content of the cached audio data being a reminder content, and the reminder audio is stored in a disk. By detecting the audio data, the voice data in the audio data is acquired and cached, and in response to detecting that the cached audio data is audio data including a reminder content through semantic parsing, the cached audio data is determined as the reminder audio, and stored in a disk, thereby removing non-voice data in the audio data acquired and a non-reminder audio in the voice data, and achieving accurate recording of a reminder audio.

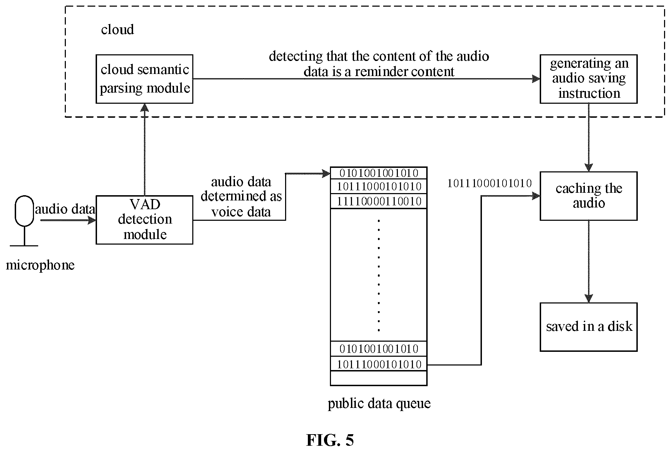

In order to clarify the method for generating a reminder audio in the embodiment of the disclosure, it will be described in combination with FIGS. 5 to 6.

FIG. 5 is a diagram illustrating a scene of a method for generating a reminder audio according to an embodiment of the disclosure. As illustrated in FIG. 5, audio data is acquired by a microphone, voice data in the audio data is detected through a VAD detection module, and the audio data determined as the voice data is written into a public data queue and then cached until the VAD detection module detects non-voice data, at this time, the caching of the audio data is stopped. The cached audio data is sent to a cloud for semantic parsing, and the cloud generates an audio saving instruction and sends the audio saving instruction to a vehicle terminal in response to detecting that the content of the audio data is a reminder content. The vehicle terminal receives the audio saving instruction, determines the cached audio data as a reminder audio, and saves the audio data in a disk. It should be noted that, in the diagram illustrated in FIG. 5, the schematic diagram shown in FIG. 5 shows a process of generating the reminder audio by the vehicle terminal when the user initiates a voice instruction. When the user continues to initiates a next voice instruction, the above process is repeated to generate a reminder audio containing complete instruction content.

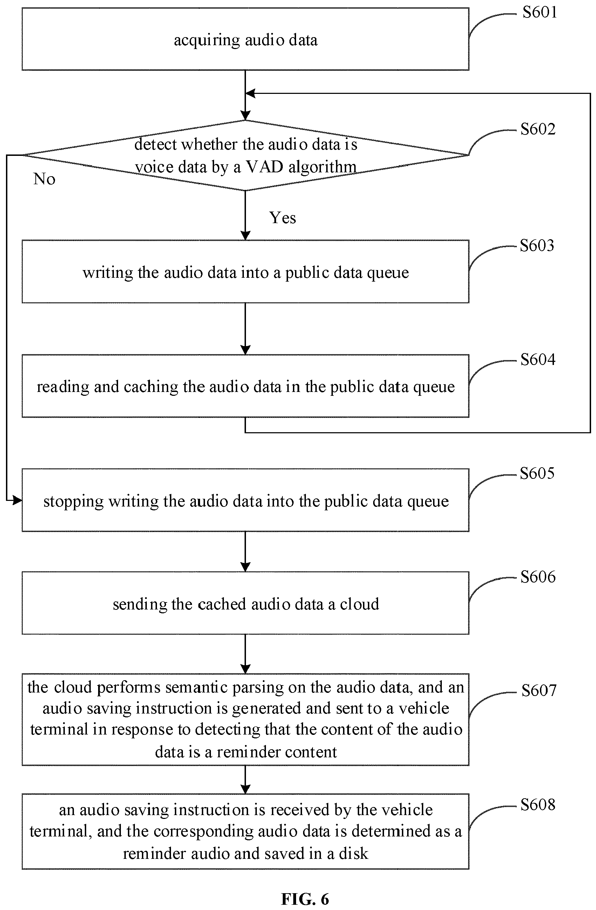

FIG. 6 is a diagram illustrating an implementation of a method for generating a reminder audio according to an embodiment of the disclosure. As illustrated in FIG. 6, the method for generating a reminder audio in the embodiment of the disclosure includes the following blocks:
At S601, audio data is acquired.

At S602, a VAD algorithm is adopted to detect whether the audio data is voice data.

If yes, block S603 is performed. If no, block S605 is performed.

At S603, the audio data is written into a public data queue.

At S604, the audio data in the public data queue is read and cached.

At S605, writing the audio data into the public data queue is stopped.

At S606, the cached audio data is sent to a cloud.

At S607, the cloud performs semantic parsing on the audio data, and an audio saving instruction is generated and sent to a vehicle terminal in response to detecting that the content of the audio data is a reminder content.

At S608, an audio saving instruction is received by the vehicle terminal, and the corresponding audio data is determined as a reminder audio and saved in a disk.

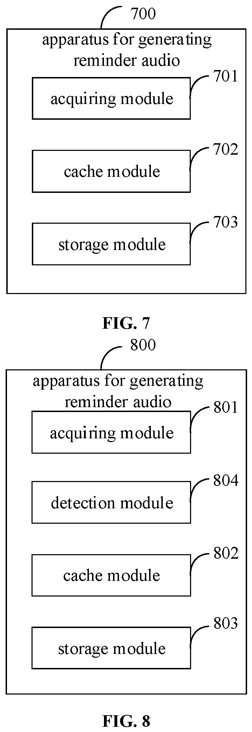

FIG. 7 is a block diagram illustrating an apparatus for generating a reminder audio according to an embodiment of the disclosure.

As illustrated in FIG. 7, an apparatus 700 for generating a reminder audio in the embodiment of the disclosure includes an acquiring module 701, a cache module 702 and a storage module 703.

The acquiring module 701 is configured to acquire audio data.

The cache module 702 is configured to cache the audio data in response to detecting that audio data is voice data.

The storage module 703 is configured to stop caching the audio data in response to detecting that audio data is non-voice data, determine the cached audio data as a reminder audio in response to a content of the cached audio data being a reminder content, and store the reminder audio in a disk.

It should be noted that the foregoing explanation of the embodiment of the method for generating a reminder audio is also applied to an apparatus for generating a reminder audio in the embodiment, and the specific process will not be repeated here.

In summary, with the apparatus for generating a reminder audio in the embodiment of the disclosure, the audio data is acquired, and the audio data is cached in response to detecting that the audio data is the voice data; and caching of the audio data is stopped in response to detecting that the audio data is non-voice data, and the cached audio data is determined as a reminder audio in response to a content of the cached audio data being a reminder content, and the reminder audio is stored in a disk. By detecting the audio data, the voice data in the audio data is acquired and cached, and when the cached audio data is audio data including the reminder content, the cached audio data is determined as the reminder audio, and stored in the disk, thereby removing non-voice data in the audio data acquired and a non-reminder audio in the voice data, and achieving accurate recording of a reminder audio.

FIG. 8 is a block diagram illustrating an apparatus for generating a reminder audio according to an embodiment of the disclosure.

As illustrated in FIG. 8, an apparatus 800 for generating a reminder audio in the embodiment of the disclosure includes an acquiring module 801, a cache module 802 and a storage module 803.

The acquiring module 801 has the same function and structure with the acquiring module 701 in the above embodiment, and the cache module 802 has the same function and structure with the cache module 702 in the above embodiment, and the storage module 803 has the same structure and function with the storage module 703 in the above embodiment.

Further, the apparatus 800 for generating a reminder audio in the embodiment of the disclosure may further include: a detection module 804, configured to detect by a voice activity detection algorithm whether audio data is the voice data.

Further, the voice activity detection algorithm is a Web RTC VAD algorithm.

Further, the cache module 802 may include a write unit configured to write the audio data into a public data queue; a read unit configured to read the audio data from the public data queue; and a cache unit configured to cache the read audio data.

Further, the apparatus 800 for generating a reminder audio in the embodiment of the disclosure may further include a sending module, configured to send the cached audio data to a cloud; a receiving module, configured to receive an audio saving instruction sent by the cloud, the audio saving instruction is generated by the cloud in response to the cloud detecting that a content of the audio data is a reminder content through semantic parsing; and a determining module, configured to determine the cached audio data as the reminder audio based on the audio saving instruction.

In summary, in the apparatus for generating a reminder audio in the embodiment of the disclosure, the audio data is acquired, and the audio data is cached in response to detecting that the audio data is the voice data; and caching of the audio data is stopped in response to detecting that the audio data is non-voice data, and the cached audio data is determined as a reminder audio in response to a content of the cached audio data being a reminder content, and the reminder audio is stored in a disk. By detecting the audio data, the voice data in the audio data is acquired and cached, and in response to detecting that the cached audio data is audio data including a reminder content through semantic parsing, the cached audio data is determined as the reminder audio, and stored in a disk, thereby removing non-voice data in the audio data acquired and a non-reminder audio in the voice data, and achieving accurate recording of a reminder audio.

According to the embodiment of the disclosure, an electronic device, a readable storage medium and a computer program product are provided in the disclosure.

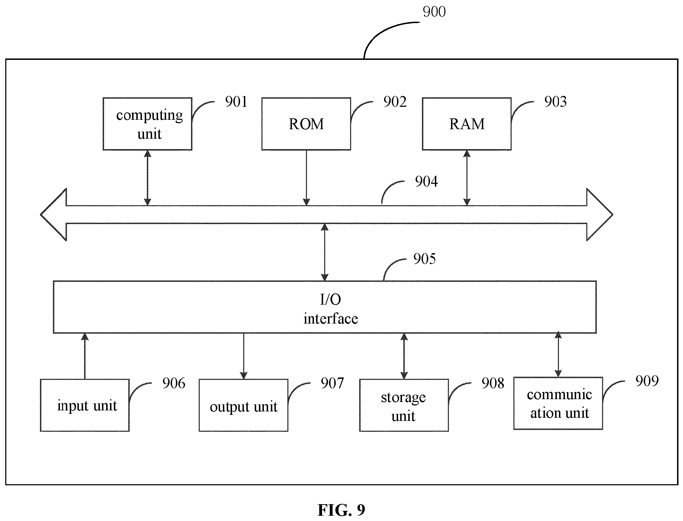

FIG. 9 is a schematic block diagram illustrating an example electronic device 900 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As shown in Fig. 9, an electronic device 900 includes a computing unit 901, configured to execute various appropriate actions and processes according to a computer program stored in a read-only memory (ROM) 902 or loaded from a memory unit 908 to a random access memory (RAM) 903. In a RAM 903, various programs and data required for an electronic device 900 may be stored. A computing unit 901, a ROM 902 and a ROM 903 may be connected with each other by a bus 904. An input/output (I/O) interface 905 is also connected to a bus 904.

A plurality of components in the electronic device 900 are connected to an I/O interface 905, and includes: an input unit 906, for example, a keyboard, a mouse, etc.; an output unit 909, for example various types of displays, speakers; a storage unit 908, for example a magnetic disk, an optical disk; and a communication unit 909, for example, a network card, a modem, a wireless transceiver. A communication unit 909 allows an electronic device 900 to exchange information/data through a computer network such as internet and/or various types of telecommunication networks and other devices.

A computing unit 901 may be various types of general and/or dedicated processing components with processing and computing ability. Some examples of a computing unit 901 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 901 performs various methods and processings as described above, for example, the method for generating a reminder audio as described in FIGS. 1 to 6. For example, in some embodiments, the method for generating a reminder audio may be further implemented as a computer software program, which is physically contained in a machine readable medium, such as a storage unit 908. In some embodiments, a part or all of the computer program may be loaded and/or installed on the electronic device 900 through a ROM 902 and/or a communication unit 909. When the computer program is loaded on a RAM 903 and performed by a computing unit 901, one or more blocks in the method for generating a reminder audio as described above may be performed. Alternatively, in other embodiments, the computing unit 901 may be configured to perform a method for generating a reminder audio in other appropriate ways (for example, by virtue of a firmware).

Various implementation modes of systems and technologies described herein may be implemented in a digital electronic circuit system, an integrated circuit system, a field programmable gate array(FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine-readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory),an optical fiber device, and a portable optical disk read-only memory(CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

According to the embodiment of the disclosure, a computer program product including a computer program is further provided in the disclosure, the computer program is configured to implement the method for generating a reminder audio as described in the above embodiment when performed by a processor.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors.

## Claims

1. A method for generating a reminder audio, comprising:
acquiring audio data (S101);
caching the audio data in response to detecting that the audio data is voice data (S102); and
stopping caching the audio data in response to detecting that the audio data is non-voice data, determining the cached audio data as a reminder audio in response to a content of the cached audio data being a reminder content, and storing the reminder audio in a disk (S103).

2. The method of claim 1, further comprising:
detecting by a voice activity detection algorithm whether the audio data is the voice data (S202).

3. The method of claim 2, wherein, the voice activity detection algorithm is a web real-time communication voice activity detection (Web RTC VAD) algorithm.

4. The method of any of claims 1 to 3, wherein, caching the audio data, comprising:
writing the audio data into a public data queue (S301);
reading the audio data from the public data queue (S302); and
caching the read audio data (S303).

5. The method of any of claims 1 to 4, further comprising:
sending the cached audio data to a cloud (S401);
receiving an audio saving instruction sent by the cloud, wherein, the audio saving instruction is generated by the cloud in response to the cloud detecting that a content of the audio data is a reminder content through semantic parsing (S402); and
determining the cached audio data as the reminder audio based on the audio saving instruction (S403).

6. An apparatus for generating a reminder audio, comprising:
an acquiring module (701; 801), configured to acquire audio data;
a cache module (702; 802), configured to cache the audio data in response to detecting that the audio data is voice data; and
a storage module (703; 803), configured to stop caching the audio data in response to detecting that the audio data is non-voice data, determine the cached audio data as a reminder audio in response to a content of the cached audio data being a reminder content, and store the reminder audio in a disk.

7. The apparatus of claim 6, further comprising:
a detection module (804), configured to detect by a voice activity detection algorithm whether the audio data is the voice data.

8. The apparatus of claim 7, wherein, the voice activity detection algorithm is a Web Real-Time Communication Voice Activity Detection (Web RTC VAD) algorithm.

9. The apparatus of claim 6, wherein, the cache module (702; 802) comprises:
a write unit, configured to write the audio data into a public data queue;
a read unit, configured to read the audio data from the public data queue; and
a cache unit, configured to cache the read audio data.

10. The apparatus of claim 6, further comprising:
a sending module, configured to send the cached audio data to a cloud;
a receiving module, configured to receive an audio saving instruction sent by the cloud, wherein, the audio saving instruction is generated by the cloud in response to the cloud detecting that a content of the audio data is a reminder content through semantic parsing; and
a determining module, configured to determine the cached audio data as the reminder audio based on the audio saving instruction.

11. An electronic device, comprising:
at least one processor; and
a memory communicatively connected to the at least one processor; wherein,
the memory is stored with instructions executable by the at least one processor, the instructions are performed by the at least one processor, to cause the at least one processor to perform the method of any of claims 1 to 5.

12. A non-transitory computer-readable storage medium stored with computer instructions, wherein, the computer instructions are configured to cause the computer to perform the method of any of claims 1 to 5.

13. A computer program product comprising a computer program, wherein, the computer program is configured to implement the method of any of claims 1 to 5 when performed by a processor.
